# EUROPEAN PATENT APPLICATION

(11) **EP 3 479 926 A1**
(43) Date of publication of application: **08.05.2019**
(21) Application number: 17200135.6
(22) Date of filing: 06.11.2017
(51) Int. Cl.: B22F 1/00, B22F 3/105, B22F 3/22, C22C 1/10, B33Y 70/00

(54) **METHOD FOR MODIFYING THE PARTICLE SHAPE AND THE PARTICLE SIZE DISTRIBUTION OF ALUMINUM-BASED POWDERS**

(71) Applicant: Technische Universität Graz, 8010 Graz (AT)
(72) Inventor: Skalon, Mateusz, 8010 Graz (AT); Sommitsch, Christof, 8051 Graz (AT)
(74) Representative: Patentanwaltskanzlei Matschnig & Forsthuber OG

(57) **Abstract**

The invention relates to a method for modifying the particle shape and particle size distribution of an aluminum-based powder comprising aluminum-based particles of irregular shape and size, wherein the method comprises an annealing step in which a homogeneous mixture of (i) said aluminum-based powder comprising aluminum-based particles of irregular shape and size and (ii) a silica powder comprising silica particles having an average particle size of 5 µm or less is annealed at an annealing temperature of between the melting point of said aluminum-based powder and a temperature not higher than 150°C of said melting point, and in an atmosphere consisting of an the inert gas having a purity of 99.9999%, for a period of time lasting at least 10 seconds. The present invention also relates to the use of an aluminum-based powder as modified by the method according to the invention for additive manufacturing or 3D-printing.

## Description

The present invention relates to a method for modifying the particle shape and particle size distribution of an aluminum-based powder comprising aluminum-based particles of irregular shape and size in order to obtain finer particles and a more spherical shape.

In industry, especially industries focused on additive manufacturing like aviation, there is big and growing interest in powder-based additive manufacturing. In individual industrial applications like manufacturing of metal parts through metal injection moulding or selective laser melting such characteristics as shape and size of powder particles are basic requirements. It is commonly known that spherical powders are characterized by a higher apparent density and flowability in comparison to those of irregular shapes. Spherical shape also allows to achieve a higher packing density of a powder bed. Commonly used industrial methods of manufacturing the spherical (or nearly spherical) aluminum powders are traditionally based on thermal spraying, plasma spraying or other mechanical means of disrupting the molten metal into separate droplets.

Processes for manufacturing spherical powders are known in the art and were previously described, e.g.:
FR2391799 A1 describes the basics of powder manufacturing by electromagnetic atomisation of molten metals.
WO2017070779 A1 discloses the introduction of additional active gas to the protective gas in order to enhance the quality of the resulting powder. It also describes a reactive metal powder atomization manufacturing process.
US2017102185 A1 describes specific process parameters of an atomisation process of molten metal in order to obtain spheroidal particles.
US2017106448 A1 describes how a spheroidal powder is created in result of melting feed material in form of a wire.
US2015231701 A1 describes a production process of spheroidal particles with a homogenous material distribution.
CA2947531 A1 describes the spheroidization of solid and solution precursor droplets of materials using plasma.
RU2401181 C2 describes a method of manufacturing powder by exploding the wire in a sealed evacuated reactor in an atmosphere containing inert gas.
US 2016/0339521 A1 describes a method for additive manufacturing employing metal powders including powders of aluminum and aluminum alloys.
US 2007/0110608 A1 describes methods for sintering an aluminum powder.

The known processes require a precise control of the process in order to obtain spherical powders. Furthermore, an inert gas has to be used as a cooling medium to provide long-enough time for powder particles solidification and spheroidization according to the surface tensions on the boundary of molten metal and gas. If not, for example air is used as a cooling medium, the manufactured powder particles will be of irregular shape due to surface oxidation which hinders the surface tension forces. Also, when water is used as cooling medium, the manufactured powder particles will be of irregular shape. This makes them unsuitable for additive manufacturing by e.g. Selective Laser Melting (SLM) of for metal injection molding. On the other hand, however, use of water as a cooling medium increases profitability of the manufacturing process significantly. Powders manufactured by said processes are commonly used in traditional powder metallurgy (press and sinter processes).

For the jetting process multiple apparatus of various designs are used. Some examples may be found in the following patent literature, e.g.:
TW350795 B describes an apparatus for mechanically disrupting the molten metal by rotating cylinders.
WO2017011900 A1 describes plasma atomization.

There are also existing elaborated solutions aimed directly at manufacturing aluminum spherical powders by means of jet-spraying, e.g.:
CN106001588 A describes a solution based on melting the metal alloy and jetting it in presence of high purity nitrogen gas. Metal flow, temperatures and jetting pressure ranges are described.
CN105817633 A describes a method of producing aluminum-silicon spherical particles using jetting in presence of high purity nitrogen atmosphere.

The above-listed methods are characterized by a high output but also by a broad particle size distribution. Therefore, in order to suit the powder batch to the requirements of additive manufacturing or metal injection moulding, said powders have to be sieved using sieves. A broad particle size distribution results from a coalescence of droplets of molten metal and probabilistic disruption of the stream of molten metal. This lowers the profitability of the process by increasing costs and the requirement of remitting unsuitable powder (e.g. too coarse; too broad particle size distribution), and, eventually results in high prices of the spherical powders.

Regardless of the listed methods and approaches for producing spherical aluminum powders, there exist alternative manufacturing methods. For example, patent application CN105112711 A describes a method for producing spherical aluminum alloys via the following steps: placing aluminum metal onto a ceramic microballoons bed; grinding and wrapping in order to obtain a homogeneous distribution of metal particles; dispersing them with the jet stream and placing the blend in the furnace; elevated temperature melts the metal which creates spherical particles by means of surface tension. By using this method powders having a particle size of between 50 and 100 mesh (149 to 297 µm) are obtained. In spite of the fact that spherical particles are obtained, their size prevents them from applications in the area of precise additive manufacturing, e.g. Selective Laser Melting (SLM) or metal injection molding, where mainly powders of particle sizes lower than 50 µm (preferably particle sizes lower than 45µm) are used.

Therefore, there exists an unresolved problem of creating fine and spherical aluminum-based powders at low prices, which aluminum-based powders are characterized by both a narrow particle size distribution and a more spherical shape.

Accordingly, it is an object of the present invention to provide a simple and cost effective method to resolve the above-mentioned technical problem concerning the manufacture of fine and spherical aluminum-based powders having narrow particle size distribution.

This object is met by a method for modifying the particle shape and particle size distribution of an aluminum-based powder comprising aluminum-based particles of irregular shape and size according to claim 1, which method is characterized in that it comprises an annealing step in which a homogeneous mixture of (i) said aluminum-based powder comprising aluminum-based particles of irregular shape and size and (ii) a silica powder comprising silica particles having an average particle size of 5 µm or less is annealed at an annealing temperature of between the melting point of said aluminum-based powder and a temperature not higher than 150°C of said melting point, and in an atmosphere consisting of an the inert gas having a purity of 99.9999%, for a period of time lasting at least 10 seconds.

Surprisingly, it has been found that the shape and particle size distribution of aluminum-based powders manufactured by air-jetting may be beneficially modified by the method according to the invention comprising mixing the aluminum-based powder with a silica powder comprising silica particles having an average particle size of 5 µm or less, and then annealing said mixture in a furnace in the presence of an inert gas atmosphere.

The invention creates the possibility of producing fine (under 10 µm) and spherical aluminum-based powder suitable for additive manufacturing (see e.g. examples and experimental data below and accompanying figures). Furthermore, the method according to the invention does not only solve the technical problem described above, but also does not require modifications or replacement of the stock of typical technological tools, e.g. typical conveyor-belt or chamber furnaces may be utilized for this process.

Accordingly, the method of the invention allows for producing spherical aluminum-based powder in a cost and time effective fashion by simply remelting already existing aluminum-based powder. In particular, the invention allows for using cheap aluminum-based powder comprising aluminum-based particles of irregular shape and size as a basic material. The final production price of the spherical aluminum-based powder as modified by the method of the present invention (current costs of < 10 EUR/kg) is significantly lower than the prices of SLM suitable, spherical aluminum-based powders currently available on the market (current costs of 50 - 60 EUR/kg). Thus, the prices of aluminum-based powders for additive manufacturing or metal injection moulding may drop at least by the factor of 2. Since the market of additive manufacturing based on aluminum-based powder increases rapidly, the need for such powders increases continuously.

Furthermore, only a limited number of alloys of spherical shape was produced so far; using the method of the present invention provides a cost and time effective possibility to produce an aluminum alloy powder having particles of spherical shape by modifying existing aluminum allow powders having particles of irregular shape and size.

The invention also allows for manipulating the powder size distribution by creating double population distribution (see e.g. examples and experimental data below and accompanying figures).

The term "aluminum-based powder" as used herein generally refers to powders comprising aluminum, such as powders comprising or consisting of pure aluminum particles, aluminum alloy particles or a mixture thereof.

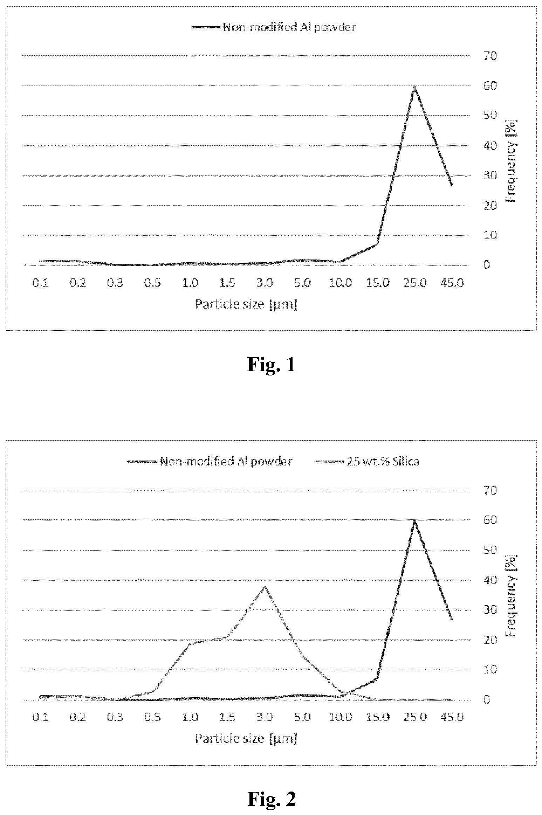

The term "aluminum-based powder comprising aluminum-based particles of irregular shape and size" as used herein refers to the non-modified aluminum-based powder that is modified by and used as a basic material in the method according to the invention. For example, such aluminum-based powder comprising aluminum-based particles of irregular shape and size may be obtained from Benda Lutz Werke, Hummel Croton Inc. or READE; for example, the aluminum powder used in the experimental data presented below was obtained from Benda Lutz Werke and has a particle size distribution (< 63 µm) as shown in the attached Fig. 1.

The average particle size of the silica particles comprised in the silica powder used in the present invention can be determined by standard methods, such as transmission electron microscopy (TEM).

The aluminum-based powder and silica powder are mixed e.g. by a Turbula mixer, to achieve homogeneity of the homogeneous mixture and then placed in the furnace.

In certain embodiments the aluminum-based powder that is used/modified in the method according to the invention has a composition essentially consisting of pure aluminum particles, aluminum alloy particles or a mixture thereof.

In certain embodiments, the aluminum-based powder comprises or consists of aluminum alloy particles. In certain embodiments, the aluminum alloy particles are selected from the group consisting of aluminum alloys from the 1xx.x series, aluminum alloys from the 2xx.x series, aluminum alloys from the 3xxx series, aluminum alloys from 4xx.x series, aluminum alloys from 5xx.x series, aluminum alloys from the 6xx.x series, aluminum alloys from the 7xx.x series, aluminum alloys from the 8xx.x series, wherein all aforementioned series are based on the Cast Aluminum Alloy Designation System, AIMn, and AISc with up to 2 wt.% of Sc, or a mixture thereof. In certain embodiments the aluminum-based powder that is used/modified in the method according to the invention has a composition essentially consisting of aluminum alloy particles, wherein the aluminum alloy particles are selected from the group consisting of aluminum alloys from the 1xx.x series, aluminum alloys from the 2xx.x series, aluminum alloys from the 3xxx series, aluminum alloys from 4xx.x series, aluminum alloys from 5xx.x series, aluminum alloys from the 6xx.x series, aluminum alloys from the 7xx.x series, aluminum alloys from the 8xx.x series, wherein all aforementioned series are based on the Cast Aluminum Alloy Designation System, AIMn, and AISc with up to 2 wt.% of Sc, or a mixture thereof.

Preferably, in case the aluminum-based powder that is used/modified in the method according to the invention has a composition essentially consisting of pure aluminum particles, the annealing temperature in the annealing step is about 750 °C.

It is an essential feature of the method of the present invention to use an inert gas having a purity of 99.9999%. The term "inert gas" means noble gas and both terms are used herein synonymously. Preferably, the inert gas is argon or an argon-helium mixture, as these inert gases are frequently used in the manufacture or sintering of aluminum powders.

Preferably the silica powder has a composition essentially consisting of silica particles having an average particle size of between 100 nm and 5 µm. Silica particles having an average particle size of less than 100 nm are expensive and, thus, cannot be used in an economical way. On the other hand, by using silica particles having an average particle size of more than 5 µm, the weight fraction of the silica would have to be very high; this would also result in economical drawbacks.

In other preferable embodiments, the silica powder has a composition essentially consisting of silica particles having an average particle size of less than 1 µm. In other preferable embodiments, the silica powder has a composition essentially consisting of silica particles having an average particle size of between 100 nm and less than 1 µm.

In preferred embodiments, the silica particles have an average particle size of about 100 nm to about 600 nm. More preferably, the silica particles have an average particle size of about 400 nm, since this average particle size provides a good ratio between size and price; i.e. the lower the size of the silica particles the larger the surface of the aluminum-based particles that can be covered and the less silica powder is required.

In preferred embodiments, the homogeneous mixture to be annealed in the annealing step comprises between about 2 wt.% and about 90 wt.% of the silica powder, based on the total weight of the homogeneous mixture. The content of the silica powder in the homogeneous mixture is determined based on the specific surface of the particles of the aluminum-based powder, that is, the content should be sufficient to fully cover surfaces of aluminum-based powder particles - generally, addition of silica powder in an amount of less than 2 wt.% is not sufficient to completely cover the surfaces of the aluminum-based particles (even if silica powder of small average particle size, e.g. 400 nm, is applied). Preferably the silica powder particles should fill-up all empty spaces among the particles of the aluminum-based powder. Generally, it is within the knowledge of those skilled in the art to choose the right amount (in wt.%) of silica powder that has to be added to the aluminum-based powder in order to get, after mixing the powders, the homogeneous mixture. Preferably, the homogeneous mixture to be annealed comprises between about 2 wt.% and about 25 wt% of the silica powder based on the total weight of the homogeneous mixture. More preferably, the homogeneous mixture to be annealed comprises about 25 wt.% of the silica powder, based on the total weight of the homogeneous mixture.

In certain embodiments, said aluminum-based powder to be modified is an air-atomized aluminum powder of technical purity (> 99,5%).

In certain embodiments, the annealing step is followed by a cooling step, in which the annealed homogeneous mixture is cooled down to room temperature, for example, at a cooling rate in the range of 1 - 30 °C/min, e.g. at a cooling rate of about 20°C/min. Also the cooling step is preferably performed in the presence of said inert gas atmosphere.

In certain embodiments, the cooling step is followed by a cleansing step comprising cleansing the cooled annealed homogeneous mixture with a cleansing fluid and drying the mixture. For example, the cleansing step may be performed by pouring the cooled annealed homogeneous mixture into water as a cleansing fluid, then draining off, and then drying the mixture. If necessary, the cleansing with the cleansing fluid (i.e. adding the cleansing fluid and draining off) may be repeated once or more before drying the mixture.

Generally, at least the annealing step is performed in a furnace, wherein the term "furnace" has to be understood in its broadest possible sense and includes all kinds of furnaces that enable a heating of the powder to the required temperature under a protective atmosphere of inert gas. Using a vessel for keeping the homogeneous mixture of the aluminum and silica powders is optional and allows one both to keep the equipment clean and to keep the homogeneous mixture in one place in the furnace and in a controllable manner.

Preferably, the at least the annealing step is performed by means of a powder bed placed in a furnace, wherein the powder bed is made up of the homogeneous mixture of the aluminum-based powder and the silica powder. The term "powder bed" as used herein refers to a layer of powder composed of the homogeneous mixture of the aluminum-based powder and the silica powder. For performing at least the annealing step in the furnace, typical conveyer belt or chamber furnaces may be utilized. These types of furnaces as well as other furnaces are well known to those skilled in the art. For example, when using a tubular/chamber furnace, the powder bed is typically put into a vessel being located/placed in the heating chamber of the chamber furnace. When using a conveyer belt furnace, the powder bed (i.e. the powder layer) is deposited on the surface of the conveyer belt and then carried through the heating chamber of the conveyer belt furnace.

In preferred embodiments the height of the powder bed described above does not exceed 30 mm. For example, the height of the layer of powder that is in the vessel placed in a chamber furnace or carried on the conveyer belt of a conveyer belt furnace does not exceed 30 mm. More preferably, the height of the powder bed is 5 mm or less.

Another aspect of the present invention relates to the use of an aluminum-based powder as modified by a method according to the present invention and as described herein in the manufacture of three-dimensional products. The aluminum-based powder as modified by means of the present invention is particularly useful in additive manufacturing and Metal Injection Moulding. The term "additive manufacturing" as used herein is well known in the art and refers to methods and processes used to create three-dimensional objects and articles, e.g. 3D-printing, thermal spraying and Selective Laser Melting (SLM).

### EXAMPLES

The present invention is shown and further described by the following examples and experimental data. The examples are based on a homogeneous mixture of (i) air-atomized aluminum powder of technical purity (>99.5%) comprising aluminum particles of irregular shape and size and (ii) silica powder comprising silica particles having an average particle size of 400 nm. The mixture was mixed with a Turbula®-mixer to achieve homogeneity and the homogeneous mixture was then placed in form of a powder bed in a tubular furnace.

The non-modified air-atomized aluminum powder was purchased from Benda Lutz Werke and its particle size distribution is depicted in **Fig. 1****.** The silica powder was purchased from US Research Nanomaterials Inc. The average particle size (400 nm) of the silica powder was determined/tested by using transmission electron microscopy (TEM).

In the first group of examples the powder bed of the homogeneous mixture of said aluminum and silica powders was of height (depth) of 5 mm and was heated up to 750°C with a rate of 10°C/min, then annealed for 10 minutes in presence of argon atmosphere (99.9999 % purity) and cooled down to room temperature with rate of 20°C/minute. The addition of the silica powder was varying from 2 wt.% to 25 wt.%, based on the total weight of the homogeneous mixture. In the second group of examples the powder bed height (powder bed depth) was equal to 15 mm while in the third group power bed height (powder bed depth) was 30 mm. The results of these examples were then compared with the reference powder, i.e. the non-modified aluminum powder as per **Fig. 1****.** Precise numerical data describing particle size distribution were shown for powders after modification (d₉₀, d₅₀ and d₁₀) and are given in table 1 below. For the non-modified aluminum powder (air-atomized, irregular, see **Fig. 1**) these parameters were as follows: d₉₀: 32.4µm, dso: 20.8µm, d₁₀: 14.1µm.

The particle size distribution of the aluminum powder before and after modification was determined using laser particles sizer Analysette 22 MicorTec plus manufactured by Fritsch GmbH. The shape of aluminum powder particles was determined by means of Scanning Electron Microscope.

The attached figures show:
Fig. 1. Particle size distribution of the non-modified air-atomized aluminum powder.
Fig. 2. Comparison of particle size distribution between the non-modified aluminum powder and after the annealing process with 25 wt.% addition of silica powder, based on the total weight of the homogeneous mixture; powder bed height/ depth = 5mm.
Fig. 3. Comparison of particle size distribution with regard to different added amounts of silica powder, based on the total weight of the homogeneous mixture; powder bed height/ depth = 5 mm. (X-axis: particle size [µm]; Y-axis: frequency [%])
Fig. 4. Comparison of particle size distribution with regard to different amounts of silica powder; powder bed height/depth = 15 mm. (X-axis: particle size [µm]; Y-axis: frequency [%])
Fig. 5. Comparison of particle size distribution with regard to different amounts of silica powder; powder bed height/depth = 30 mm. (X-axis: particle size [µm]; Y-axis: frequency [%])

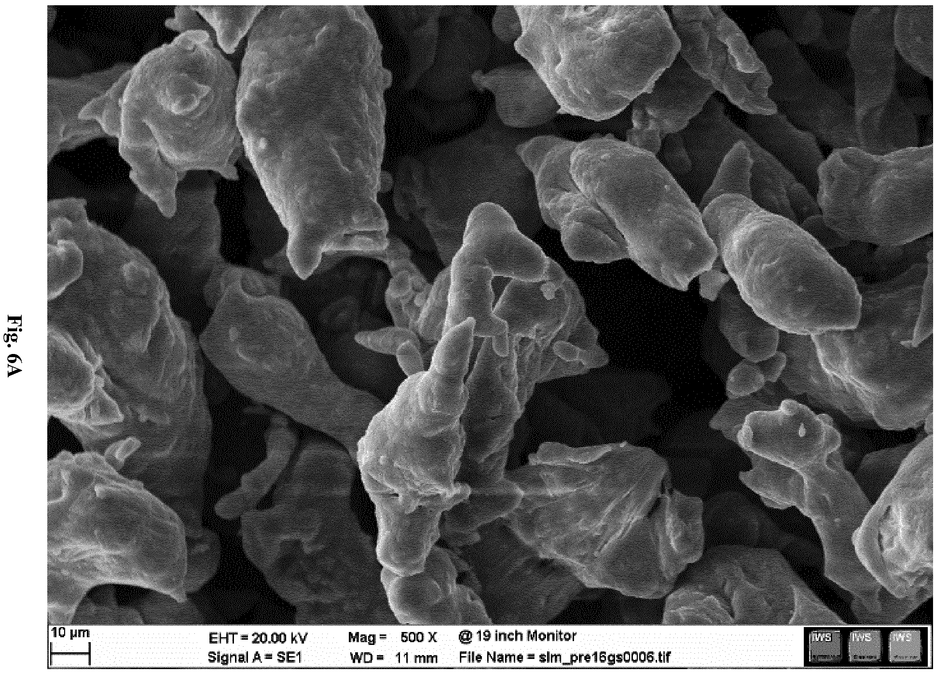

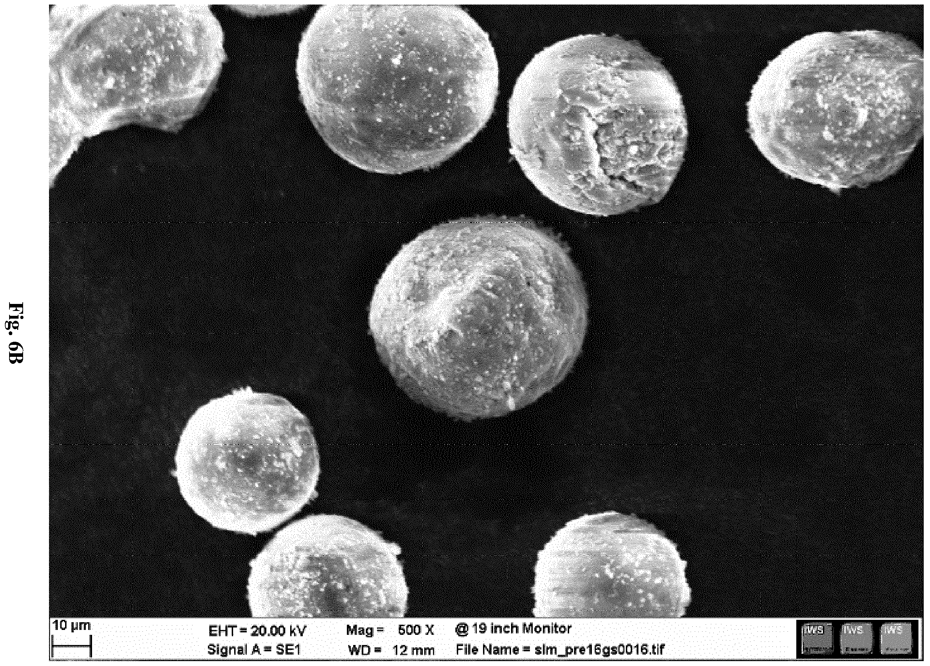

Fig. 6. Comparison of particle shapes between the non-modified aluminum powder (left) and the modified aluminum powder (right) after the annealing process with 25 wt. % addition of silica powder, based on the total weight of the homogeneous mixture; powder bed height/ depth = 30 mm.

**Table 1:**

| | | | | | | |
|---|---|---|---|---|---|---|
| **d₉₀** | | **Silica powder addition [wt.%]** | | | | |
| | **powder bed depth [mm]** | **25** | **10** | **7.5** | **5** | **2** |
| | **5** | 3.6 | 28.2 | 31.7 | 32.9 | 32.5 |
| | **15** | 23.3 | 30 | 32.2 | 33 | 32.9 |
| | **30** | 23.3 | 29.1 | 32 | 33.6 | 31.8 |
| | | | | | | |
| **d₅₀** | | **Silica powder addition [wt.%]** | | | | |
| | **powder bed depth [mm]** | **25** | **10** | **7.5** | **5** | **2** |
| | **5** | 1.6 | 14.1 | 19.7 | 21 | 20.07 |
| | **15** | 2.2 | 16.8 | 19.9 | 21 | 21 |
| | **30** | 2 | 15.8 | 19.7 | 21.3 | 20.3 |
| | | | | | | |
| **d₁₀** | | **Silica addition [wt.%]** | | | | |
| | **powder bed depth [mm]** | **25** | **10** | **7.5** | **5** | **2** |
| | **5** | 0.7 | 1.1 | 1.7 | 3.1 | 3.4 |
| | **15** | 0.7 | 1.2 | 1.7 | 2.5 | 4.2 |
| | **30** | 0.6 | 1.1 | 1.6 | 3.8 | 11.7 |

The results clearly demonstrate that the method according to the invention creates the possibility of producing fine (under 10 µm) and spherical aluminum-based powder suitable for additive manufacturing. (see **Fig. 2**).

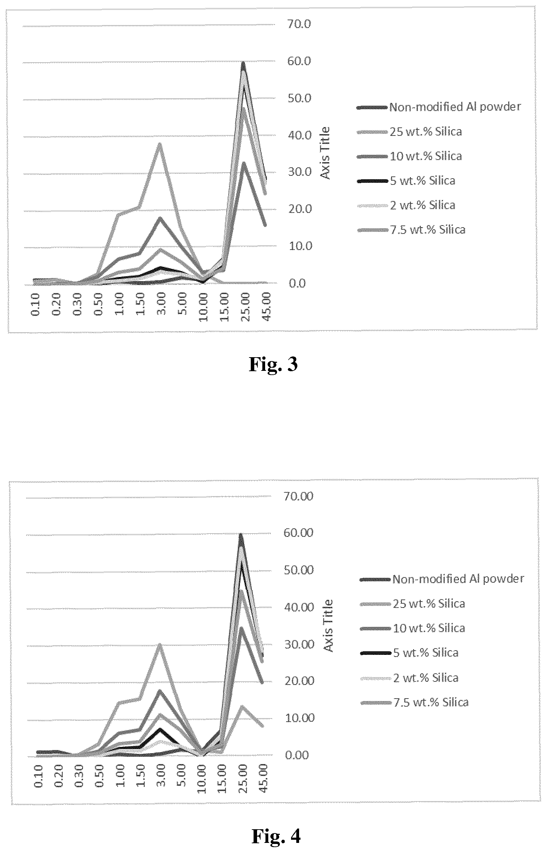

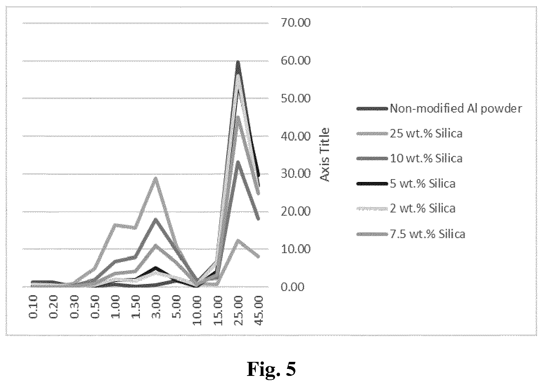

Furthermore, the results clearly demonstrate that the method according to the invention creates the possibility of manipulating the aluminum powder size distribution by creating double population distribution (see **Fig. 3, Fig. 4** and **Fig. 5**).

## Claims

1. A method for modifying the particle shape and particle size distribution of an aluminum-based powder comprising aluminum-based particles of irregular shape and size, **characterized in that** the method comprises an annealing step in which a homogeneous mixture of (i) said aluminum-based powder comprising aluminum-based particles of irregular shape and size and (ii) a silica powder comprising silica particles having an average particle size of 5 µm or less is annealed at an annealing temperature of between the melting point of said aluminum-based powder and a temperature not higher than 150°C of said melting point, and in an atmosphere consisting of an the inert gas having a purity of 99.9999%, for a period of time lasting at least 10 seconds.

2. The method according to claim 1, **characterized in that** the aluminum-based powder has a composition essentially consisting of pure aluminum particles, aluminum alloy particles or a mixture thereof.

3. The method according to claim 2, **characterized in that** the aluminum alloy is selected from the group consisting of aluminum alloys from the 1xx.x series, aluminum alloys from the 2xx.x series, aluminum alloys from the 3xxx series, aluminum alloys from 4xx.x series, aluminum alloys from 5xx.x series, aluminum alloys from the 6xx.x series, aluminum alloys from the 7xx.x series, aluminum alloys from the 8xx.x series, wherein all aforementioned series are based on the Cast Aluminum Alloy Designation System, AIMn, and AISc with up to 2 wt. % of Sc, or a mixture thereof.

4. The method according to any one of claims 1 to 3, **characterized in that**, when the aluminum-based powder has a composition essentially consisting of pure aluminum particles, the annealing temperature is about 750 °C.

5. The method according to any one of claims 1 to 4, **characterized in that** the inert gas is argon or an argon-helium mixture.

6. The method according to any one of claims 1 to 5, **characterized in that** the silica powder has a composition essentially consisting of silica particles having an average particle size of between 100 nm and 5 µm.

7. The method according to any one of claims 1 to 5, **characterized in that** the silica powder has a composition essentially consisting of silica particles having an average particle size of less than 1 µm.

8. The method of claim 7, **characterized in that** the silica particles have an average particle size of about 100 nm to about 600 nm.

9. The method according to claim 8, **characterized in that** the silica particles have an average particle size of about 400 nm.

10. The method according to any one of claims 1 to 9, **characterized in that** the homogeneous mixture to be annealed in the annealing step comprises between about 2 wt.% and about 90 wt.% of the silica powder, based on the total weight of the homogeneous mixture.

11. The method according to claim 10, **characterized in that** the homogeneous mixture to be annealed comprises between about 2 wt. % and about 25 wt% of the silica powder based on the total weight of the homogeneous mixture.

12. The method according to claim 11, **characterized in that** the homogeneous mixture to be annealed comprises about 25 wt.% of the silica powder, based on the total weight of the homogeneous mixture.

13. The method according to any one of claims 1 to 12, **characterized in that** said aluminum-based powder to be modified is an air-atomized aluminum powder of technical purity (> 99,5%).

14. The method according to any one of claims 1 to 13, **characterized in that** the annealing step is followed by a cooling step, in which the annealed homogeneous mixture is cooled down to room temperature, preferably at a cooling rate of about 20°C/min.

15. The method of claim 14, **characterized in that** the cooling step is followed by a cleansing step comprising cleansing the cooled annealed homogeneous mixture with a cleansing fluid and drying the mixture.

16. The method according to any one of claims 1 to 15, **characterized in that** at least the annealing step is performed by means of a powder bed placed in a furnace, wherein the powder bed is made up of the homogeneous mixture of the aluminum-based powder and the silica powder.

17. The method of claim 16, **characterized in that** the height of the powder bed does not exceed 30 mm.

18. The method of claim 16 or 17, **characterized in that** the height of the powder bed is 5 mm or less.

19. Use of an aluminum-based powder as modified by a method according to any one of claims 1 to 18 in the manufacture of three-dimensional products, including additive manufacturing and Metal Injection Moulding.
